Europäisches Patentamt

**European Patent Office**

**Office européen des brevets**

(11) Publication number: **0 060 489**
A1

# (12) EUROPEAN PATENT APPLICATION

(21) Application number: **82101837.1**

(22) Date of filing: **08.03.82**

(51) Int. Cl.³: **G 03 B 15/04**

(30) Priority: **16.03.81 US 244466**

(43) Date of publication of application: **22.09.82**
**Bulletin 82/38**

(84) Designated Contracting States: **BE DE FR GB IT NL**

(71) Applicant: **GTE Products Corporation, 100 West 10th Street, Wilmington Delaware (US)**

(72) Inventor: **Broadt, David R., R.D. 1 Box 276, Lewisburg, Pa. 17701 (US)**
Inventor: **Kackenmeister, Carl F., 1298 Market Street, Williamsport, Pa. 17701 (US)**
Inventor: **Shaffer, John W., 2518 Waldman Drive, Williamsport, Pa. 17701 (US)**

(74) Representative: **Reinländer & Bernhardt Patentanwälte, Orthstrasse 12, D-8000 München 60 (DE)**

(54) **Multilamp photoflash array.**

(57) A multilamp photoflash unit includes a housing member (11) having a back portion (23) with a plurality of flashlamp receiving cavities (27) and a front portion (25) which transmits light with the back and front portions of a polycarbonate material and sealed to one another to provide containment of particles within the housing member. A blue dye or pigment is preferably included in the polycarbonate material to enhance the light spectral characteristics. The photoflash unit is fabricated by thermoforming the polycarbonate material to provide a housing member with photolamp receiving cavities and a light transmitting front portion sealed to enclose the photolamps in the cavities.

## MULTILAMP PHOTOFLASH ARRAY

TECHNICAL FIELD

This invention relates to multilamp photoflash units or arrays and more particularly to a housing member for containing particles which occur when rupture of a photolamp takes place and a process for fabricating the above-mentioned housing member from a polycarbonate film.

BACKGROUND ART

It is well known to provide multilamp photoflash units or arrays wherein a flashlamp is disposed in each one of a plurality of spaced cavities. The cavities have a reflective surface adjacent the flashlamp and a cover encloses the flashlamps and cavities. Examples of such structures are the well known flashcube of U.S. Patent No. 3,327,105 or the magicube of U.S. Patent No. 3,730,669. Also, linear arrays having a plurality of cavities and flashlamps aligned in either a single direction or in a back-to-back relationship are illustrated by the flashbar of U.S. Patent No. 3,857,667 or the flip flash of U.S. Patent No. 4,017,728.

In all of the above-mentioned examples, the cavities and flashlamps are enclosed in a protective shield or cover which is in the form of a relatively rigid molded plastic envelope. Frequently the envelope is formed from a polystyrene thermoplastic resin which is configured to have four or more relatively rigid sidewalls, a top wall and an open bottom through which a reflector unit having the cavities containing a flashlamp are inserted. Thereafter, the rigid molded structure is attached to a base support by heat sealing, ultrasonic welding, mechanical snaps or other well known attaching means. Thus, a photoflash array is provided having an envelope for containing any particles which occur when a photolamp ruptures or explodes.

Usually, the above-described structure includes bases and covers which are fabricated by injection molding a material such as polystyrene or a copolymer thereof. Also, a material such as cellulose propionate or polyvinyl chloride is utilized in a vacuum-forming process to provide a reflector unit. Thus, different processes are employed to provide each of the different components necessary for assembly of a photoflash array. Obviously, multiple processes, materials and assemblies are deleterious to minimum manufacturing costs.

Additionally, it is a common practice to coat the photolamps of a photoflash array with a blue lacquer in order to provide a light having a color temperature closer to the color temperature of sunlight. Unfortunately, it has been found that light emitted by a blue lacquered lamp tends toward multiple passes through the lamp due to the reflection from a reflector unit wherein the lacquer-coated lamp is disposed. As a result, it has been found that the lamp coating is heated and weakened by the absorbtion of radiant energy.

SUMMARY OF THE INVENTION

An object of the present invention is to provide an enhanced multilamp photoflash unit. Another object of the invention is to provide an improved housing member for a multilamp photoflash unit. Still another object of the invention is the utilization of a material providing an enhanced housing member for containing undesired particles encountered by inadvertent rupturing of a photoflash lamp.

These and other objects, advantages and capabilities are achieved in one aspect of the invention by a multilamp photoflash unit having a housing member of a polycarbonate material characterized by good clarity, high impact strength, good burst strength and tear resistance, low heat distortion, good rigidity and an ease of forming an assembly. The housing member is readily formed from a single sheet of material and configured to provide a back portion with flashlamp receiving cavities and a light transmittable front portion foldable to enclose the flashlamps and weldable to the back portion to provide containment of the flashlamps should inadvertent bursting of the flashlamps occur.

In another aspect of the invention, the multilamp photoflash unit is fabricated by a process wherein a housing member is formed from a single film of polycarbonate material. The formed housing member includes a back portion with a plurality of cavities formed to receive flashlamps and a front portion having a light transmitting capability. The front portion is folded to enclose the cavities and flashlamps and sealed to the back portion of the housing member. Thus, a housing member providing envelopment of photoflash lamps is configured from a single sheet of polycarbonate material.

In still another aspect of the invention, a housing member for a multilamp photoflash unit is formed from a blue film of polycarbonate material. This blue housing member not only provides the above-mentioned advantages and capabilities for particle containment but also provides an enhanced spectral response while reducing the radiant energy heating of the lacquer coating on the individual flashlamps.

BRIEF DESCRIPTION OF THE DRAWINGS

Fig. 1 is an exploded elevational view of a preferred form of multilamp photoflash unit employing the housing member of the invention;

Fig. 2 is a front view of the multilamp photoflash unit of Fig. 1 with the components positionally located for operational use; and

Fig. 3 is a chart illustrating a preferred process for fabricating the multilamp photoflash unit of Figs. 1 and 2.

BEST MODE FOR CARRYING OUT THE INVENTION

For a better understanding of the present invention, together with other and further objects, advantages and capabilities thereof, reference is made to the following disclosure and appended claims in conjunction with the accompanying drawings.

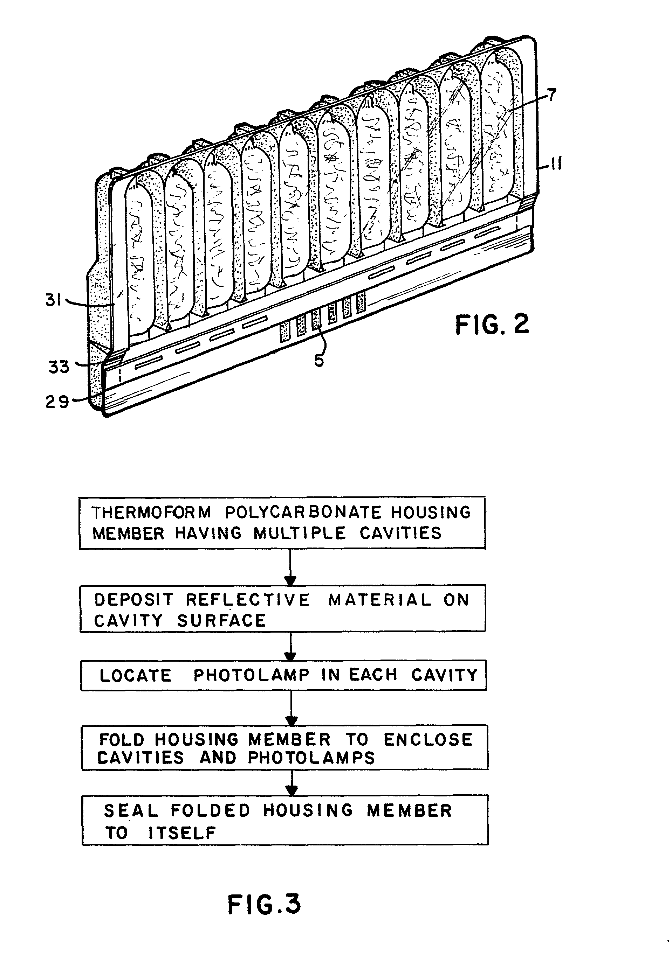

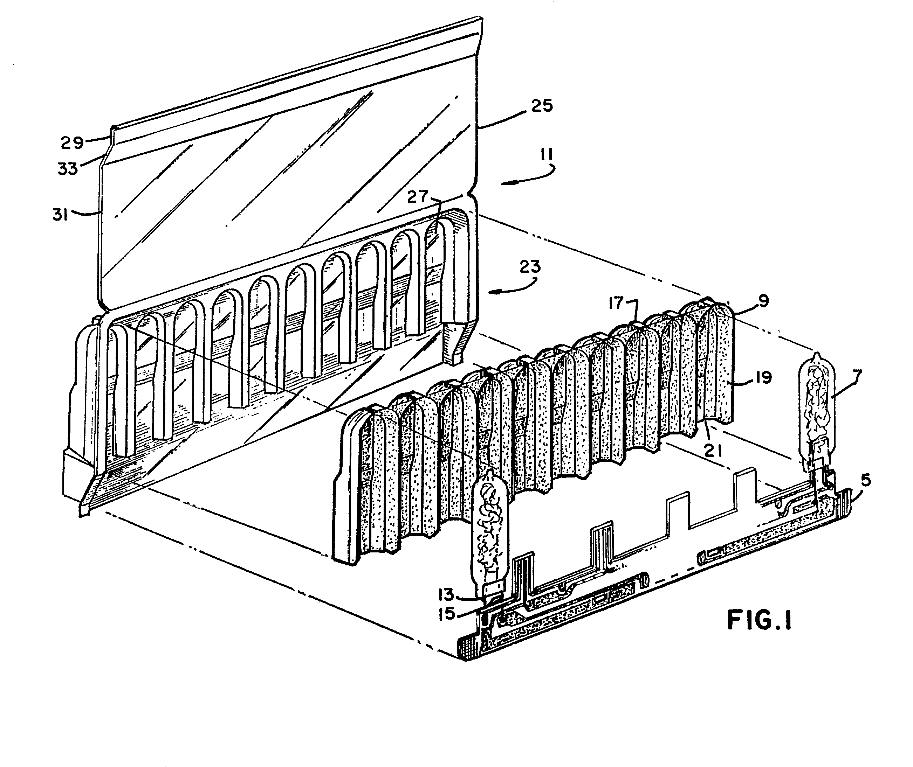

In the drawings, Fig. 1 illustrates a preferred embodiment of a multilamp photoflash unit. The unit includes a printed circuit board 5, multiple flashlamps 7, a reflector unit 9 and a housing member 11. The printed circuit board 5 is of an ordinary form and includes a substrate of insulator material having a plurality of electrically conductive circuits affixed thereto. These electrical circuits are, in turn, connected to the multiplicity of flashlamps 7 by a pair of connecting wires 13 and 15 respectively and also to an energizing source (not shown) of a camera for example.

This preferred embodiment includes a reflector unit 9 having a multiplicity of spaced cavities 17. The cavities 17 are aligned in a single plane and direction and each has a reflective surface 19 and is formed to receive a flashlamp 7 therein. Also, each one of the cavities 17 has an off-set portion 21 and is formed to accommodate a portion of the printed circuit board 5.

Formed to receive the reflector unit 9 is a housing member 11. This housing member 11 has a back portion 23 and a foldable front portion 25 and is fabricated from a single sheet of polycarbonate material. The back portion 23 is formed to provide a plurality of spaced cavities 27 which are configured to permit nesting therein of the spaced cavities 17 of the reflector unit 9.

Also, the front portion 25 of the housing member 11 has a capability to transmit light and is foldable with respect to the back portion 23 to provide an envelope wherein the back portion cavities 27, reflector cavities 17, flashlamps 7 and a portion of the printed circuit board 5 are contained. In order to provide the above-mentioned containment, the front portion 25 includes first and second relatively flat portions, 29 and 31 respectively, which are joined by a tapered portion 33. Upon folding this front portion 25, the first and second flat portions 29 and 31 and the tapered portion 33 are sealed to the back portion 23 of the housing member 11 to provide an envelope. Moreover, the tapered portion 33 provides clearance for the connecting wires 13 and 15 whereby the flashlamps 7 are attached and the front portion is affixed to a portion of the printed circuit board 5 to complete the desired containment envelope.

Alternatively, an embodiment may be provided wherein the reflector unit 9 is omitted. Therein, the spaced cavities 27 of the back portion 23 of the housing member 11 are covered with a reflective coating and a flashlamp 7 is disposed within each one of the cavities 27. Thereafter, the front portion 25 is sealed to the back portion 23 of the housing member 11 and affixed to a portion of the printed circuit board 5 as previously enumerated. Thus, an envelope is provided wherein is contained the cavities 27 to the back portion 23, the flashlamps 7 and a portion of the printed circuit board 5.

Importantly, the housing member 11 is of a polycarbonate material which is especially suited to a thermoforming process wherein the complete housing member 11 is formable from a single sheet of material. Preferably, the single sheet of polycarbonate material is of a thickness of about 0.015 inch and material with a thickness in the range of about 0.010 to 0.025 inch has been found acceptable. Also, a commercially available form of polycarbonate having a thickness in the above-mentioned range is available from the Lexan Products Division of the General Electric Company at One Plastics Avenue, Pittsfield, Massachusetts 01201. Moreover, this polycarbonate material has a specfication which includes light transmission in the range of about 85 to 90%, a burst strength which is unbreakable as measured in Mullins Points, a tear strength which is initially in the range of about 1200 to 1600 lbs./inch and propogation of about 20 to 25 grams/mil, a heat deflection in the range of about 260 to 280°F, a notched Izod impact strength in ft. lbs./inch in the range of 12 to 16 and is easily weldable utilizing sonic sealing.

Further, Fig. 3 illustrates a preferred process for fabricating a multilamp photoflash array utilizing the above-mentioned polycarbonate material. As can be readily followed from the chart of Fig. 3, a sheet of polycarbonate material, preferably having a thickness of about 0.015 inch, is thermoformed to provide a housing member 11 as illustrated in Fig. 1. Therein is provided a plurality of cavities whereon is deposited a layer of reflective material. A photolamp is positionally located within each of the cavities having a reflective surface and the housing member 11 is folded and sealed to itself to provide an envelope for the cavities and flashlamps contained therein.

In order to establish the effectiveness of the above-mentioned multilamp photoflash array, a comparison test with prior known materials was conducted wherein specially made exploding flashlamps were employed. The following percentage failure chart indicates the containment capabilities of the enhanced structure.

| | % FAILURE | | | |
| FILM TYPE/THICKNESS | TOP FOLD | END SEAL | FRONT | CAVITY BACK |
| --- | --- | --- | --- | --- |
| Cellulose Propionate/25-Mil | 96 | 89 | 89 | 56 |
| Polyvinyl Chloride/30-Mil | 100 | 100 | 100 | 100 |
| Impact Styrene/30-Mil | 40 | 70 | 20 | 90 |
| Polycarbonate/15-Mil | 8 | 80* | 0 | 0 |

*Defective Sealing Method

Thus, it is apparent from the above-listed results that a thermoformed polycarbonate structure exhibits a much greater particle containment capability than many of the prior known materials.

Additionally, it has been found that the inclusion of a blue dye or pigments in the above-mentioned polycarbonate material greatly enhances the photometric output of the structure. Moreover, the inclusion of the dye or pigments in the polycarbonate material does not have any detrimental effect upon the polycarbonate material processing or array fabrication insofar as can be determined.

On the contrary, tests were conducted on a multilamp photoflash array comparing a polycarbonate housing member having a blue dye therein with a clear polycarbonate housing member having flashlamps therein coated with a blue lacquer. The blue polycarbonate housing member had an output, in zonal lumen seconds, of about 376 as compared with 333 for a clear polycarbonate housing member employing blue lacquer coated flashlamps. Thus, a 12.9% increase in light output was obtained with the blue polycarbonate housing member. Also, the blue polycarbonate housing member tested provided an output having a color temperature of 5476°K as compared with 5183°K for the clear polycarbonate housing member with the lacquer-coated lamp therein.

While there has been shown and described what is at present considered the preferred embodiments of the invention, it will be obvious to those skilled in the art that various changes and modifications may be made therein without departing from the invention as defined by the appended claims.

INDUSTRIAL APPLICABILITY

Thus, there has been provided a unique multilamp photoflash unit having a housing member wherein a back portion has a plurality of spaced cavities, a front portion transmits light and encloses the cavities and the front and back portion are of a polycarbonate material. Utilizing such a structure, it has been found that relatively thin sheets of material, as compared with other known materials, are readily thermoformed to provide a housing member having a desired configuration. Such a fabrication technique is relatively low cost as compared with injection molding techniques employed with material of increased thickness.

Also, a blue dye or pigments in the above-described polycarbonate housing member enhances the light output which is a particularly significant factor in attempts to provide flashlamp arrays of reduced size. In other words, the improved particle containment features provided by a housing member of polycarbonate material are indirectly enhanced by coloring the polycarbonate blue. Moreover, the blue colored polycarbonate housing member provides improved lamp coating strength, improved particle containment, and increased light transmission for the array.

Additionally, the employment of a relatively thin polycarbonate material greatly facilitates the multilamp photoflash array fabrication process by permitting a thermoforming technique as compared with the more commonly employed injection molding processes associated with thicker materials. Also, the seal capabilities of the polycarbonate material wherein the structure is folded and sealed to itself provides an improved structure at a relatively good cost figure.

D21,248

WHAT IS CLAIMED

1. A multilamp photoflash unit comprising a housing member having back and front portions with said back portion having a plurality of spaced cavities each having a reflective surface and a light transmitting front portion formed to enclose said cavities and a photolamp disposed in each one of said cavities, said unit characterized by the improvement wherein said housing member is a formed film of polycarbonate material.

2. The multilamp photoflash unit of Claim 1 where said housing member is a formed film of polycarbonate material weldable to itself.

3. The multilamp photoflash unit of Claim 1 wherein said housing member is a formed film of polycarbonate material with a light transmission of about 85 to 90%.

4. The multilamp photoflash unit of Claim 1 wherein said housing member is a formed film of polycarbonate material having a thickness in the range of about 0.010 to 0.025 inch.

5. The multilamp photoflash unit of Claim 1 wherein said housing member is a formed film of polycarbonate material having an Izod impact strength in the range of about 12.0 to 16.0 ft. lb./inch of notch.

6. The multilamp photoflash unit of Claim 1 wherein said housing member is a formed film of polycarbonate material having an Izod impact strength in the range of 12.0 to 16.0 ft. lb./inch of notch, a heat deflection temperature in the range of about 260 to 280°F., good rigidity and sonic weldability.

7. A multilamp photoflash unit comprising a housing member, a reflector unit and a multiplicity of photoflash lamps, said housing member having a back portion with a plurality of spaced cavities and a light transmitting front portion formed to fold over and enclose said cavities; said reflector unit having a plurality of spaced cavities each having a reflective surface and formed to nest within said cavities of said housing member, and each one of said multiplicity of photoflash lamps disposed within a cavity of said reflector unit, said photoflash unit characterized by the improvement wherein said housing member is a formed film of polycarbonate material.

8. The multilamp photoflash unit of Claim 7 wherein said housing member is a formed film of polycarbonate material having a thickness in the range of 0.010 to 0.025 inch and an Izod impact strength in the range of about 12.0 to 16.0 ft. lb./inch of notch.

9. The multilamp photoflash unit of Claim 7 wherein said housing member is a formed film of polycarbonate material with a light transmission capability of 85 to 90%, is sonic weldable to itself and of a thickness in the range of about 0.010 to 0.025 inch.

10. The multilamp photoflash unit of Claim 7 wherein said cavities of said reflector unit are aligned in a single plane and direction, said light transmitting front portion of said housing member is folded over and welded to said back portion and said housing member is a formed film of polycarbonate material.

11. A multilamp photoflash unit fabricating process including the steps of forming a housing member having a back portion with a plurality of photolamp receiving cavities and a foldable light transmitting front portion, locating a photolamp within each one of said photolamp receiving cavities, folding said front portion of said housing member to enclose said flashlamps and into contact with said back portion and sealing said front and back portions of said housing member, said process being characterized by the improvement wherein said housing member is thermoformed from a film of polycarbonate material.

12. The fabricating process of Claim 11 characterized by the improvement wherein said housing member is thermoformed from a film of polycarbonate material having a thickness in the range of about . 0.010 to 0.025 inch.

13. The fabricating process of Claim 11 including the steps of forming a printed circuit board, affixing each one of said photolamps to said printed circuit board, locating said photolamps within said cavities and said printed circuit board between said front and back portions of said housing member and sealing said front portion of said housing member to said back portion and to said printed circuit board.

14. The fabricating process of Claim 11 including the steps of forming a reflector unit having a plurality of spaced cavities formed to nest in said cavities of said housing member; forming a printed circuit board and affixing said flashlamps to said circuit board; locating flashlamps within said cavities of said reflector unit and said reflector unit within said housing member; and sealing said front portion of said housing member to said back portion and to said printed circuit board.

15. The fabricating process of Claim 11 characterized by the improvement wherein said housing member is thermoformed from a film of polycarbonate material having an Izod impact strength in the range of about 12.0 to 16.0 ft. lb./inch of notch, a light transmission capability of about 90 to 95%, a deformation temperature in the range of about 260°F. to 280°F. and a thickness in the range of about 0.010 to 0.025 inch.

16. A multilamp photoflash unit comprising a housing member having back and front portions wherein said back portion has a plurality of spaced cavities each having a reflective surface and formed to receive a photolamp and a light transmitting front portion formed to enclose said cavities and a photolamp disposed in each one of said plurality of cavities, said unit characterized by the improvement wherein said housing member is a formed film of blue polycarbonate material.

17. The multilamp photoflash unit of Claim 16 wherein said front portion of said housing member is folded to enclose said cavities and sealed to said back portion of said housing member.

18. The multilamp photoflash unit of Claim 16 wherein said formed film of blue polycarbonate material has an Izod impact strength in the range of about 12.0 to 16.0 ft. lb./inch of notch.

19. The multilamp photoflash unit of Claim 16 wherein said formed film of blue polycarbonate material has a heat deflection temperature of about 270°F., a thickness of about 0.015 inch and provides a light output at a color temperature of about 5476 °K.

0060489

FIG. 2

| THERMOFORM POLYCARBONATE HOUSING MEMBER HAVING MULTIPLE CAVITIES |
| --- |
| DEPOSIT REFLECTIVE MATERIAL ON CAVITY SURFACE |
| LOCATE PHOTOLAMP IN EACH CAVITY |
| FOLD HOUSING MEMBER TO ENCLOSE CAVITIES AND PHOTOLAMPS |
| SEAL FOLDED HOUSING MEMBER TO ITSELF |

FIG.3

FIG.1

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | GB-A-1 182 497 (SYLVANIA ELECTRIC PRODUCTS) *Page 1, lines 56-74* | 1,11 | G 03 B 15/04 |
| A | FR-A-2 267 566 (GENERAL ELECTRIC COMP.) *Claims 1,2* | | |

TECHNICAL FIELDS SEARCHED (Int. Cl. 3)

G 03 B 15/00
F 21 K 5/00

The present search report has been drawn up for all claims

| Place of search | Date of completion of the search | Examiner |
|---|---|---|
| THE HAGUE | 21-04-1982 | PRATSCH H.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82